# EUROPEAN PATENT SPECIFICATION

(11) **EP 2 784 455 B1**
(45) Date of publication and mention of the grant of the patent: **04.09.2019**
(21) Application number: 12852155.6
(22) Date of filing: 31.10.2012
(51) Int. Cl.: G01G 13/00, G01G 21/23, G01G 23/12, B66C 1/00

(54) **SUSPENDING TOOL FOR WEIGHING DEVICE AND WEIGHING DEVICE**
WERKZEUG ZUM AUFHÄNGEN VON WIEGEVORRICHTUNG UND WIEGEVORRICHTUNG
OUTIL DE SUSPENSION POUR DISPOSITIF DE PESAGE ET DISPOSITIF DE PESAGE

(30) Priority: 21.11.2011 JP 2011253537
(43) Date of publication of application: 01.10.2014
(73) Proprietor: Yamato Scale Co., Ltd., Akashi-shi, Hyogo 673-0849 (JP)
(72) Inventor: OKUNOSONO, Akinari, Akashi-shi, Hyogo 673-0849 (JP); TSURUOKA, Masatomi, Akashi-shi, Hyogo 673-0849 (JP)
(74) Representative: Whitlock, Holly Elizabeth Ann
(86) International application number: PCT/JP2012/006982
(87) International publication number: WO 2013/076923

(56) References cited:
- JP-A- H11 159 191
- JP-A- 2009 065 043
- JP-U- H0 181 535
- JP-U- S5 486 179
- US-A- 2 435 328
- US-A1- 2008 073 129
- US-B1- 6 303 882
- US-B1- 6 303 882

## Description

### Technical Field

The present invention relates to a suspending unit for a weighing device, which is used to suspend a weighing container mounted to the weighing device from a weighing device body, and the weighing device including the suspending unit. Particularly, the present invention relates to a suspending unit for a weighing device, which is used to suspend a weighing hopper (scale hopper) for use in a weighing device such as a packer scale which adjusts the weight of objects such as powdered products (detergent, fertilizer, etc.), or granular products (resin pellets, cereal, feeding stuff, etc.) so that the objects have a predetermined target weight, and charges the objects of the target weight into containers such as bags, from a load cell mounted to the weighing device body, and the weighing device including the suspending unit

### Background Art

A weighing device such as a packer scale which efficiently lumps together resin pellets which are raw materials for a resin molding process such that the resin pellets have a target weight and charges the resin pellets of the target weight into bags, is provided with weighing hoppers (scale hoppers) which are supplied with the objects from above, weigh the objects and discharge downward the weighed objects. Especially, the weighing device used to adjust the weight of the objects such as the powdered products (detergent, fertilizer, etc.), or the granular products (resin pellets, cereal, feeding stuff, etc.) such that the objects have a predetermined target weight, is required to weigh the objects having a heavy weight of, for example, several tens kg, which are charged into one bag. For this reason, many weighing hoppers have heavy weights to ensure their sufficient sizes or sufficient strength. For example, a certain weighing hopper has a weight of 50kg or more.

By the way, it is required that such a weighing hopper be allowed to move vertically (up and down) to a certain extent with respect to a weighing device body during actuation of the weighing device, in order to weigh the objects thrown into the weighing hopper, by each weighing hopper. To this end, typically, the weighing hopper is suspended from a load cell mounted to the weighing device body, by means of a suspending unit (see, e.g., Patent Literature 1).

However, if a flexibility between the load cell and the weighing hopper is low like the structure disclosed in Patent Literature 1, an impact generated when the objects are thrown into the weighing hopper adversely affects weighing of the objects, which degrades a weighing accuracy. To solve such a problem, there is known a configuration in which one or a plurality of suspending unit(s) is/are fastened to the upper portion of the weighing hopper, and is/are hooked in a shaft-like load application section provided in the load cell fastened to the weighing device body and extending horizontally, to suspend the weighing hopper from the weighing device body.

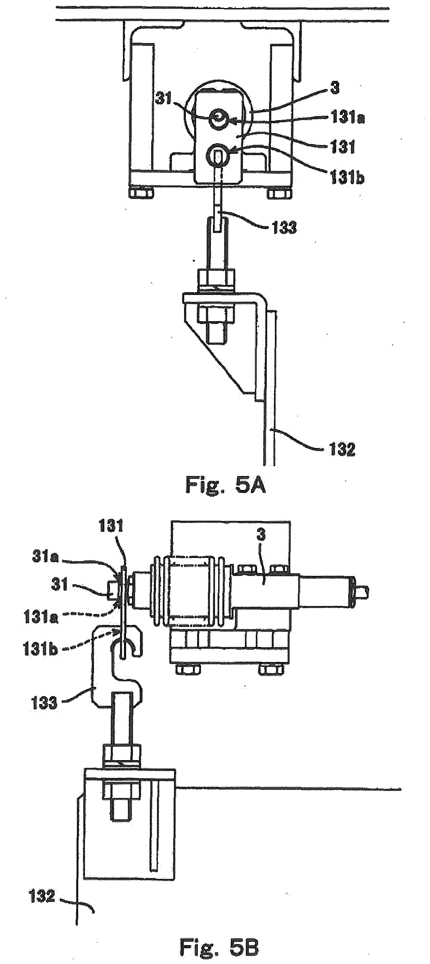

Figs. 5A and 5B are views showing a mounting state of the conventional suspending unit for the weighing device. Fig. 5A is a front view and Fig. 5B is a side view. As shown in Figs. 5A and 5B, the conventional suspending unit includes a plate member 131 mounted to a load cell 3 and a hook member 133 having a hook shape, one end portion of which is fastened to a weighing hopper 132 and the other end portion of which is hooked in the plate member 131. The plate member 131 has a first hole 131a into which a load application section 31 of the load cell 3 is inserted, and a second hole 131b used to hook the hook member 133. To improve a weighing accuracy, the load application section 31 of the load cell 3 and the first hole 131a of the first plate member 131 are in point-contact with each other. To this end, a section 31a of the load application section 31 of the load cell 3, which is engageable with the first hole 131a, has a smaller diameter than the other portion in an axial direction of the load application section 31 and is cut to be curved in a radial direction of the shaft of the load application section 31 when viewed from a direction perpendicular to the shaft of the load application section 31, and the first hole 131a has a shape in which its axial center portion has a smallest diameter. As should be understood from this, the conventional suspending unit has a structure in which the hook member 133, the plate member 131 and the load cell 3 are not fastened to each other and have a certain flexibility.

### Citation List

### Patent Literature

Patent Literature 1: Japanese Patent Publication No. 3857966
US 2,435,328 relates to the combination with a load hook, of a roller chain having a terminal link comprising spaced parallel side plates pivotally secured at one end to the adjacent link and having aligned apertures at the other end, a boss formed on said load hook, said boss having a pair of transverse slots located inwardly from the ends thereof and spaced apart to receive said side plates, a bore extending through said boss disposed substantially perpendicular to and intersecting said slots, and a pin projecting through said bore and through the apertures in said side plates, said boss providing bearings for said pin on opposite sides of each of said plates.

Documents US 6303882 and US 2008/073129 disclose a suspending unit, wherein the weighing device is integral part to the suspending unit.

### Summary of Invention

### Technical Problem

However, as described above, a considerably great impact load, which is added with the weight of the weighing hopper, is applied to the suspending unit when the objects having a heavy weight are thrown into the weighing hopper. For example, in a case where the objects of about 25kg are thrown into the weighing hopper, the impact load applied to the suspending unit may be about 150kg in some cases. When such a great load impact is applied to the conventional suspending unit, the hook member 133 and the weighing hopper 132 may move upward as if it jumps relative to the plate member 131 in some cases. When the hook member 133 jumps upward relative to the plate member 131, an engagement position (force application point) between the plate member 131 and the load cell 3 is axially deviated and thereby a zero point in the weighing is deviated, which makes it impossible to carry out correct weighing. When the hook member 133 jumps upward relative to the plate member 131 due to the great impact load, a fluctuation of the weighing hopper 132 is increased, and wait time (weighing stabilization time) required to achieve a predetermined weighing accuracy after the objects are thrown into the weighing hopper becomes long. This impedes achievement of higher-speed weighing.

The present invention has been developed under the above stated circumstances, and an object of the present invention is to provide a suspending unit for a weighing device and the weighing device, which enable weighing to be performed with a higher weighing accuracy and in a shorter time.

### Solution to Problem

To solve the above described problem, according to the present invention, there is provided a suspending unit for a weighing device which is fastened to a weighing container to suspend the weighing container from a load cell including a shaft-like load application section, the suspending unit comprising: a first member mounted to the load application section of the load cell; and a second member fastened to the weighing container; wherein the first member has a first hole extending in a predetermined first axis direction and a second hole extending in a second axis direction which three-dimensionally crosses the first axis; wherein the first member is mounted to the load application section of the load cell via a first ball bearing fitted to the first hole such that the first member is rotatable relative to the load application section; and wherein the second member is mounted to the first member via a second ball bearing fitted to the second hole of the first member such that the second member is rotatable relative to the first member.

In accordance with this configuration, the first member of the suspending unit is mounted to the load application section of the load cell via the first ball bearing such that the first member is rotatable relative to the load application section around the shaft (around the first axis) of the load application section. In addition, the second member fastened to the weighing container is mounted to the first member such that the second member is rotatable relative to the first member around the second axis which three-diinensionally crosses the first axis. In this structure, when the objects are thrown into the weighing container, the first member and the second member are pivoted around the two axes, respectively, such that the impact is absorbed, thereby allowing the weighing container to be displaced horizontally and vertically. In addition, the pivot motion caused by the impact is quickly diminished by the weight of the weighing container and the weight of the objects, and the ball bearings with a low friction allow the first member and the second member to quickly return to positions at which the weighing container is in a lowest position. Furthermore, because of the absence of the hook member which is used in the conventional example, a jump motion of the weighing container and the second member, relative to the load cell and the first member, due to the impact generated when the objects are thrown into the weighing container, will not occur, and the first member mounted to the load application section of the load cell is not displaced from a proper position. This allows the impact applied to the weighing container to be efficiently released and the weighing container to be stabilized in a shorter time. As a result, weighing can be carried out with a higher weighing accuracy and in a shorter time.

The second axis may be an axis included in both of a first virtual plane perpendicular to the first axis and a second virtual plane parallel to the first axis.

A center-to-center distance between the first ball bearing and the second ball bearing may be set greater than a sum of a radius of the first ball bearing and a radius of the second ball bearing and equal to or less than 1.5 times as large as the sum. This makes it possible to reduce the amount of the pivot motion of the first member due to the impact and stabilize the weighing container in a shorter time.

The weighing container to which the suspending unit for the weighing device may be fastened may be a weighing hopper.

The first member may have a first surface perpendicular to the first axis and a second surface perpendicular to the second axis. With this structure, the mounting surface by which the first member is mounted to the load cell and the mounting surface by which the second member is mounted to the first member are flat surfaces. As a result, space saving can be achieved, and the first member is easily rotatable (pivotable) relative to the load cell and the second member is easily rotatable (pivotable) relative to the first member.

The second member may have a mounting surface parallel to the second surface; and a rotary shaft of the second member may be mounted to the mounting surface such that the rotary shaft extends in a direction perpendicular to the mounting surface. This makes it possible to easily mount the second member to the first member, while achieving space saving.

A weighing device of the present invention comprises the suspending unit for the weighing device having the above stated configuration, and a load cell including a shaft-like load application section and fastened to a weighing device body in a state in which a shaft of the load application section is oriented horizontally; and a weighing hopper including a mounting section at an upper portion thereof; wherein the second member of the suspending unit for the weighing device is fastened to the mounting section of the weighing hopper and the first member of the suspending unit for the weighing device is mounted to the load application section of the load cell via the first ball bearing.

The above and further objects, features and advantages of the invention will more fully be apparent from the following detailed description with accompanying drawings.

### Advantageous Effects of Invention

The present invention has been described above, and can achieve advantages that weighing can be carried out with a higher accuracy and in a shorter time.

### Brief Description of Drawings

Fig. 1 is a perspective view showing a structure of a suspending unit for a weighing device according to an embodiment of the present invention.
Fig. 2 is an exploded perspective view showing the suspending unit for the weighing device of Fig. 1 .
Fig. 3 is a front view showing a mounting state of the suspending unit for the weighing device of Fig. 1 .
Fig. 4 is a side view (direction along IV in Fig. 3) of the suspending unit for the weighing device of Fig. 3 .
Fig. 5A is a front view showing the mounting state of a conventional suspending unit for a weighing device.
Fig. 5B is a side view showing the mounting state of the conventional suspending unit for the weighing device.

### Description of Embodiments

Hereinafter, a specific exemplary configuration of a suspending unit for a weighing device, and the weighing device including the suspending unit according to an embodiment of the present invention will be described with reference to the drawings. Hereinafter, throughout the drawings, the same or corresponding components are identified by the same reference symbols and will not be described in repetition in some cases. The specific description below is merely intended to recite features of the suspending unit for the weighing device, and the weighing device of an embodiment of the present invention. For example, when wordings which are the same as those which identify the suspending unit for the weighing device or corresponding wordings are designated by reference symbols to specifically describe a specific example below, specific components are an example of the corresponding components of the suspending unit for the weighing device. Therefore, the features of the suspending unit for the weighing device and the weighing device are in no way intended to be limited by description provided below.

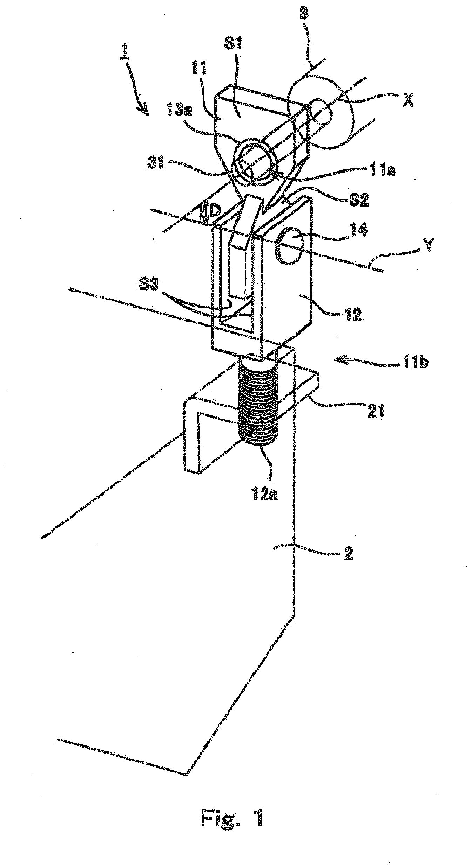

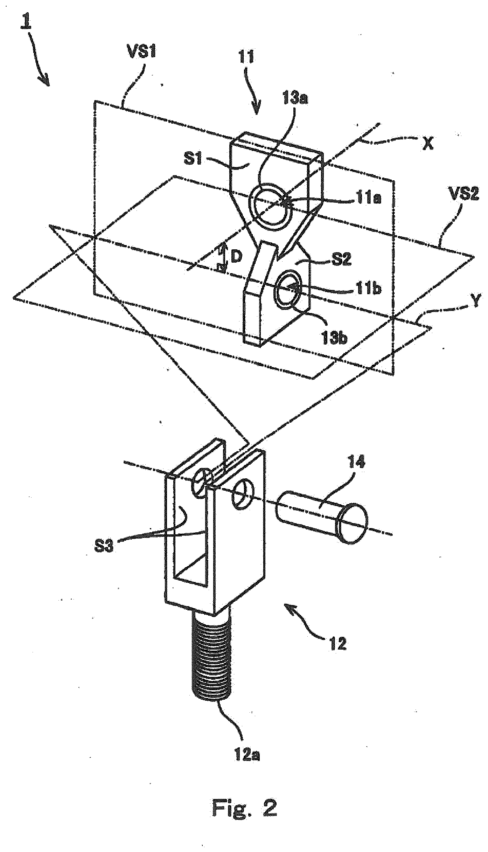

Fig. 1 is a perspective view showing a structure of a suspending unit for a weighing device according to an embodiment of the present invention. Fig. 2 is an exploded perspective view showing the suspending unit for the weighing device of Fig. 1. As shown in Figs. 1 and 2, a suspending unit 1 of the present embodiment includes a first member 11 and a second member 12.

The first member 11 has a first hole 11a extending in a predetermined first axis X direction and a second hole 11b extending in a second axis Y direction which three-dimensionally crosses the first axis X. In the present embodiment, the second axis Y is an axis included in both of a first virtual plane VS1 perpendicular to the first axis X and a second virtual plane VS2 parallel to the first axis X. In other words, when viewed from above in a state in which the suspending unit 1 is mounted to the weighing device, the first axis X (first hole 11a) and the second axis Y (second hole 11b) are orthogonal to each other. Alternatively, the first axis X and the second axis Y need not be always orthogonal to each other so long as a weighing container (weighing hopper 2 as will be described later, etc.) is three-dimensionally pivotable, in a state in which the weighing container is mounted to the weighing device by means of the suspending unit 1.

In the present embodiment, the first member 11 is positioned such that the first hole 11a and the second hole 11b overlap with each other when viewed from above. The first member 11 has a first surface S1 perpendicular to the first axis X and a second surface S2 perpendicular to the second axis Y. In other words, in the present embodiment, the first member 11 has a shape in which two plate sections are combined to be perpendicular to each other, and the plate sections have the first hole 11a and the second hole 11b, respectively. It should be noted that the first member 11 may be formed by casting or by combining two plate members. In addition, a first ball bearing 13a is fitted to the first hole 11a of the first member 11 and a second ball bearing 13b is fitted to the second hole 11b of the first member 11.

The second member 12 has at one end portion thereof, a mounting surface S3 parallel to the second surface S2 of the first member 11. A rotary shaft 14 is mounted to the mounting surface S3 such that the rotary shaft 14 extends in a direction perpendicular to the mounting surface S3. The second member 12 is mounted to the first member 11 via the second ball bearing 13b fitted to the second hole lib of the first member 11 such that the second member 12 is rotatable relative to the first member 11. Specifically, by inserting the rotary shaft 14 of the second member 12 into the second ball bearing 13b, the second member 12 is rotatable around the rotary shaft 14 relative to the first member 11. An inner diameter of the second ball bearing 13b is determined to conform to a shaft diameter of the rotary shaft 14 of the second member 12 (the rotary shaft 14 can be inserted into the second ball bearing 13b and a slack between the rotary shaft 14 and the second ball bearing 13b in a radial direction is smallest). Since the first member 11 has the second surface S2 perpendicular to the second axis Y, the mounting surface by which the second member 12 is mounted to the first member 11 is a flat surface. As a result, space saving can be achieved, and the second member 12 is easily rotatable (pivotable) relative to the first member 11. Furthermore, since the second member 12 has the mounting surface S3 parallel to the second surface S2 and the rotary shaft 14 is mounted to the mounting surface S3 such that the rotary shaft 14 extends in the direction perpendicular to the mounting surface S3, the second member 12 can be easily mounted to the first member 11, while achieving space saving.

In the present embodiment, the mounting surface S3 of the second member 12 extends from a base end portion to which a weighing container mounting section 12a is fastened, toward both sides of the first member 11 in the second axis Y direction (mounting surface S3 has a substantially-U shape). However, the present invention is not limited to this so long as the second member 12 is mounted to the first member 11 such that the second member 12 is rotatable (pivotable) relative to the first member 11. For example, the mounting surface S3 may be provided only at one side of the first member 11 in the second axis Y direction, and a restricting member (e.g., bolt) for preventing disengagement of the rotary shaft 14 may be fastened to the rotary shaft 14 at the other side of the first member 11 in the second axis Y direction.

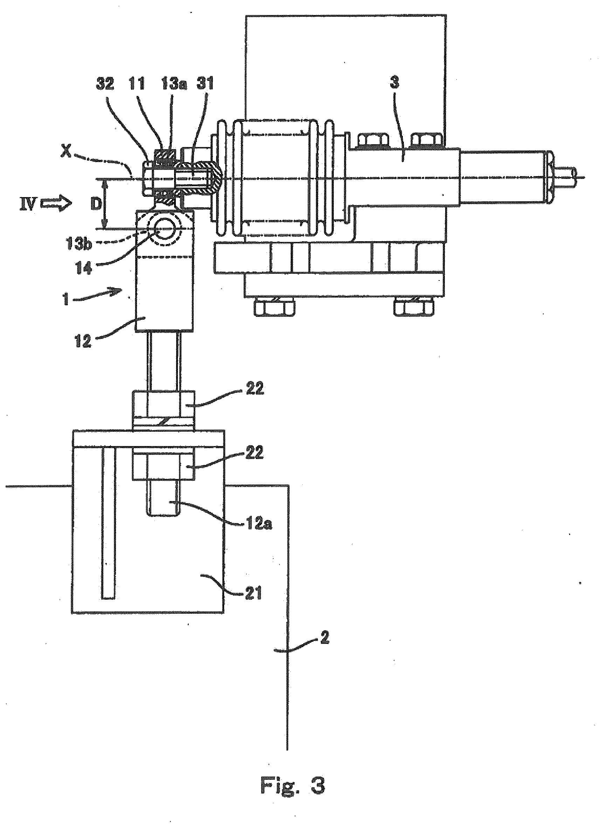

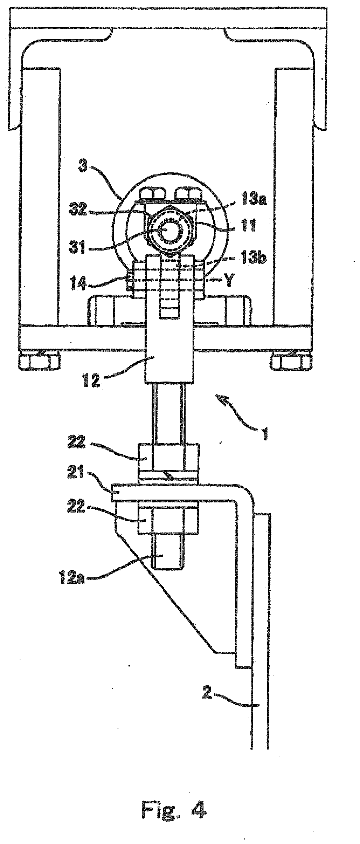

Fig. 3 is a front view showing a mounting state of the suspending unit for the weighing device of Fig. 1. Fig. 4 is a side view (direction along IV in Fig. 3) of the suspending unit for the weighing device of Fig. 3.

The other end portion of the second member 12 is provided with the weighing container mounting section 12a used to fasten the weighing hopper (scale hopper) 2 which is the weighing container. The weighing container mounting section 12a has a threaded portion. The weighing container mounting section 12a is fastened to a flange section 21 fastened to the weighing hopper 2 by using a fastening member 22 such as a bolt.

The first member 11 is mounted to a shaft-like load application section 31 of the load cell 3 via the first ball bearing 13a fitted to the first hole 11a such that the first member 11 is rotatable relative to the load application section 31, An inner diameter of the first ball bearing 13a is determined to conform to a shaft diameter of the load application section 31 of the load cell 3 (the first ball bearing 13a and the first member 11 are slidable in the first axis X direction relative to the load application section 31 of the load cell 3 and a slack between the first ball bearing 13a and the load application section 31, in the radial direction, is smallest). The load cell 3 is fastened to a weighing device body (not shown) in a state in which the shaft of the load application section 31 is oriented horizontally. In other words, the first axis X is oriented horizontally in a state in which the suspending unit 1 is mounted to the load cell 3. The load application section 31 has a threaded tip end portion. When the suspending unit 1 is mounted to the load cell 3, a motion of the first member 11 in the first axis X direction is restricted by a restricting member 32 (see Fig. 3) such as a bolt. As described above, since the first member 11 has the first surface S1 perpendicular to the first axis X, the mounting surface by which the first member 11 is mounted to the load cell 3 is a flat surface. As a result, space saving can be achieved and the first member 11 is easily rotatable relative to the load cell 3.

By mounting the first member 11 to the load application section 31 of the load cell 3 and fastening the weighing hopper (weighing container) 2 to the second member 12, in the above described manner, the weighing hopper 2 is suspended from the load cell 3 via the suspending unit 1 for the weighing device. In the present embodiment, it is supposed that one weighing hopper 2 is provided with four flange sections 21 at four corners thereof, and is suspended from four load cells 3 using four suspending units 1 for the weighing device in such a manner that the four suspending units 1 are fastened to the four flange sections 21, respectively (this is not shown). However, the number or layout of the load cells 3 are not particularly limited. For example, the above stated suspending unit 1 is applicable to a configuration in which three load cells 3 are fastened to the weighing device body and the weighing hopper 2 is suspended from and mounted to the three load cells 3 at three points. In this way, instead of four points, the weighing hopper 2 may be supported at three or less points or at five or more points.

In accordance with the above described configuration, the first member 11 of the suspending unit 1 is mounted to the load application section 31 of the load cell 3 via the first ball bearing 13a such that the first member 11 is rotatable relative to the load application section 31 around the shaft (around the first axis X) of the load application section 31. In addition, the second member 12 fastened to the weighing hopper 2 which is the weighing container is mounted to the first member 11 via the second ball bearing 13b such that the second member 12 is rotatable relative to the first member 11 around the second axis Y included in both of the first virtual plane VS1 perpendicular to the first axis X and the second virtual plane VS2 parallel to the first axis X (the second axis Y three-dimensionally crossing the first axis X).

In this structure, when the objects are thrown into the weighing hopper 2, the first member 11 is pivoted around the axis X and the second member 12 is pivoted around the axis Y such that the impact is absorbed, thereby allowing the weighing hopper 2 to be displaced horizontally and vertically. In addition, this pivot motion caused by the impact is diminished quickly by the weight of the weighing hopper 2 and the weight of the objects, and the ball bearing 13a with a low friction and the ball bearing 13b with a low friction allow the first member 11 and the second member 12 to quickly return to positions, respectively (positions before the objects are thrown into the weighing hopper 2) at which the weighing hopper 2 is in a lowest position. Furthermore, because of the absence of the hook member which is used in the conventional example, a jump motion of the weighing hopper 2 and the second member 12, relative to the load cell 3 and the first member 11, due to the impact generated when the objects are thrown into the weighing hopper 2, will not occur, and the first member 11 mounted to the load application section 31 of the load cell 3 is not displaced from a proper position. This allows the impact applied to the weighing hopper 2 to be efficiently released and the weighing hopper 2 to be stabilized in a shorter time. As a result, weighing can be carried out with a higher weighing accuracy and in a shorter time. In the conventional weighing device, a fluctuation preventing mechanism or a clamping device is typically provided to diminish the pivot motion of the weighing hopper 2, which occurs when the objects are thrown into the weighing hopper 2. In contrast, in accordance with the configuration of the present embodiment, the amount of the pivot motion can be reduced. This can eliminate a need for a member for diminishing the pivot motion of the weighing hopper 2, and hence the weighing device is allowed to have a simplified structure.

Preferably, a center-to-center distance D between the first ball bearing 13a and the second ball bearing 13b is set so that the first ball bearing 13a and the second ball bearing 13b are as close to each other as possible. Specifically, the center-to-center distance D is preferably set greater than a sum of a radius (radius of outer circle) R1 of the first ball bearing 13a and a radius (radius of outer circle) R2 of the second ball bearing 13b and equal to or less than 1.5 times as large as the sum (R1 + R2 < D ≤ 1.5 (R1 + R2)). This makes it possible to reduce the amount of the pivot motion of the first member 11 due to the impact and stabilize the weighing container in a shorter time.

In the present embodiment, as the first ball bearing 13a and the second ball bearing 13b, the same ball bearings (radius R) may be used. In this case, the center-to-center distance D between the two ball bearings 13a, 13b is preferably set as 2R <D ≦3R.

Although in the above described embodiment, the suspending unit 1 for suspending the weighing hopper (scale hopper) 2 provided in the packer scale has been described, the weighing hopper is merely an example of the weighing container and any weighing container may be used so long as it is used in a state in which it is suspended from the load cell. Moreover, the suspending unit 1 is applicable to a suspending unit for suspending a weighing container provided in a weighing device (combination weigher, platform scale, etc.) other than the packer scale.

Numerous modifications and alternative embodiments of the invention will be apparent to those skilled in the art in view of the foregoing description. Accordingly, the description is to be construed as illustrative only, and is provided for the purpose of teaching those skilled in the art the best mode of carrying out the invention.

### Industrial Applicability

A suspending unit for a weighing device and the weighing device of the present invention are effectively used to perform weighing with a higher weighing accuracy and in a shorter time.

### Reference Signs List

1: suspending unit
2 : weighing hopper
3 : load cell
11 : first member
11a : first hole
11b : second hole
12 : second member
12a : weighing container mounting section
13a : first ball bearing
13b : second ball bearing
14 : rotary shaft
21 : flange section
22 : fastening member
31 : load application section
32 : restricting member

## Claims

1. A suspending unit (1) for a weighing device which is fastened to a weighing container (2) to suspend the weighing container from a load cell including a shaft-like load application section extending in a predetermined first axis direction which is a horizontal direction, the load cell being configured to receive a load in a direction perpendicular to the predetermined first axis direction, the suspending unit comprising:
a first member (11) mounted to the load application section (31) of the load cell (3); and
a second member (12) fastened to the weighing container (2);
wherein the first member (11) has a first hole (11a) extending in the predetermined first axis direction and a second hole (11b) extending in a second axis direction which three-dimensionally crosses the first axis;
wherein the first member (11) is mounted to the load application section (31) of the load cell (3) via a first ball bearing (13a) fitted to the first hole (11a) such that the first member (11) is rotatable relative to the load application section (31); and
wherein the second member (12) is mounted to the first member (11) via a second ball bearing (13b) fitted to the second hole (11b) of the first member (11) such that the second member (12) is rotatable relative to the first member (11).

2. The suspending unit for the weighing device according to claim 1,
wherein the second axis is an axis included in both of a first virtual plane perpendicular to the first axis and a second virtual plane parallel to the first axis.

3. The suspending unit for the weighing device according to claim 1 or 2,
wherein a center-to-center distance between the first ball bearing (13a) and the second ball bearing (13b) is set greater than a sum of a radius of the first ball bearing and a radius of the second ball bearing and equal to or less than 1.5 times as large as the sum.

4. The suspending unit for the weighing device according to any one of claims 1 to 3,
wherein the weighing container to which the suspending unit for the weighing device is fastened is a weighing hopper (2).

5. The suspending unit for the weighing device according to any one of claims 1 to 4,
wherein the first member (11) has a first surface perpendicular to the first axis and a second surface perpendicular to the second axis.

6. The suspending unit for the weighing device according to claim 5,
wherein the second member (12) has a mounting surface parallel to the second surface; and
wherein a rotary shaft (14) of the second member (12) is mounted to the mounting surface such that the rotary shaft extends in a direction perpendicular to the mounting surface.

7. A weighing device comprising:
the suspending unit (1) for the weighing device as recited in any one of claims 1 to 6;
a load cell (3) including a shaft-like load application section (31) and fastened to a weighing device body in a state in which a shaft of the load application section is oriented horizontally; and
a weighing hopper (2) including a mounting section (12a) at an upper portion thereof;
wherein the second member (12) of the suspending unit for the weighing device is fastened to the mounting section (12a) of the weighing hopper and the first member (11) of the suspending unit (1) for the weighing device is mounted to the load application section (31) of the load cell (3) via the first ball bearing (13a).

## Patentansprüche

1. Aufhängungseinheit (1) für eine Wägevorrichtung, die an einem Wägebehälter (2) befestigt ist, zum Aufhängen des Wägebehälters an einer Wägezelle mit einem wellenartigen Lasteinleitungsteil, der sich in einer vorbestimmten ersten Achsrichtung erstreckt, die eine horizontale Richtung ist, wobei die Wägezelle zum Aufnehmen einer Last in einer Richtung konfiguriert ist, die zur vorbestimmten ersten Achsrichtung lotrecht ist, wobei die Aufhängungseinheit Folgendes aufweist:
ein erstes Element (11), das am Lasteinleitungsteil (31) der Wägezelle (3) montiert ist; und
ein zweites Element (12), das am Wägebehälter (2) befestigt ist;
wobei das erste Element (11) ein erstes Loch (11a), das sich in der vorbestimmten ersten Achsrichtung erstreckt, und ein zweites Loch (11b), das sich in einer zweiten Achsrichtung erstreckt, die die erste Achse dreidimensional kreuzt, hat;
wobei das erste Element (11) über ein erstes Kugellager (13a), das am ersten Loch (11a) eingebaut ist, am Lasteinleitungsteil (31) der Wägezelle (3) montiert ist, so dass das erste Element (11) relativ zum Lasteinleitungsteil (31) drehbar ist; und
wobei das zweite Element (12) über ein zweites Kugellager (13b), das am zweiten Loch (11b) des ersten Elements (11) eingebaut ist, am ersten Element (11) montiert ist, so dass das zweite Element (12) relativ zum ersten Element (11) drehbar ist.

2. Aufhängungseinheit für die Wägevorrichtung nach Anspruch 1,
wobei die zweite Achse eine Achse ist, die sowohl in einer ersten virtuellen Ebene, die zur ersten Achse lotrecht ist, als auch einer zweiten virtuellen Ebene, die zur ersten Achse parallel ist, enthalten ist.

3. Aufhängungseinheit für die Wägevorrichtung nach Anspruch 1 oder 2,
wobei ein Mittenabstand zwischen dem ersten Kugellager (13a) und dem zweiten Kugellager (13b) größer als eine Summe eines Radius des ersten Kugellagers und eines Radius des zweiten Kugellagers und kleiner oder gleich dem 1,5-fachen der Summe eingestellt ist.

4. Aufhängungseinheit für die Wägevorrichtung nach einem der Ansprüche 1 bis 3,
wobei der Wägebehälter, an dem die Aufhängungseinheit für die Wägevorrichtung befestigt ist, ein Wiegetrichter (2) ist.

5. Aufhängungseinheit für die Wägevorrichtung nach einem der Ansprüche 1 bis 4,
wobei das erste Element (11) eine erste zur ersten Achse lotrechte Oberfläche und eine zweite zur zweiten Achse lotrechte Oberfläche hat.

6. Aufhängungseinheit für die Wägevorrichtung nach Anspruch 5,
wobei das zweite Element (12) eine zur zweiten Oberfläche parallele Montagefläche hat und
wobei eine Drehwelle (14) des zweiten Elements (12) an der Montagefläche montiert ist, so dass die Drehwelle in einer zur Montagefläche lotrechten Richtung verläuft.

7. Wägevorrichtung, die Folgendes aufweist:
die Aufhängungseinheit (1) für die Wägevorrichtung nach einem der Ansprüche 1 bis 6;
eine Wägezelle (3), die einen wellenartigen Lasteinleitungsteil (31) hat und in einem Zustand an einem Wägevorrichtungskörper befestigt ist, in dem eine Welle des Lasteinleitungsteils horizontal ausgerichtet ist; und
einen Wiegetrichter (2) mit einem Montageteil (12a) an einem oberen Teil davon;
wobei das zweite Element (12) der Aufhängungseinheit für die Wägevorrichtung am Montageteil (12a) des Wiegetrichters befestigt ist und das erste Element (11) der Aufhängungseinheit (1) für die Wägevorrichtung über das erste Kugellager (13a) am Lasteinleitungsteil (31) der Wägezelle (3) montiert ist.

## Revendications

1. Unité de suspension (1) d'un dispositif de pesage qui est fixée à un contenant de pesage (2) pour suspendre le contenant de pesage à une cellule de charge comportant une section d'application de charge en forme d'arbre s'étendant dans un premier sens d'axe prédéterminé qui est un sens horizontal, la cellule de charge étant configurée pour recevoir une charge dans un sens perpendiculaire au premier sens d'axe prédéterminé, l'unité de suspension comprenant :
un premier élément (11) monté contre la section d'application de charge (31) de la cellule de charge (3) ;
et
un second élément (12) fixé au contenant de pesage (2) ;
dans lequel le premier élément (11) comporte un premier trou (11a) s'étendant dans le premier sens d'axe prédéterminé et un second trou (11b) s'étendant dans un second sens d'axe qui croise tridimensionnellement le premier axe ;
dans lequel le premier élément (11) est monté contre la section d'application de charge (31) de la cellule de charge (3) par l'intermédiaire d'un premier roulement à billes (13a) ajusté au premier trou (11a) de telle sorte que le premier élément (11) puisse tourner par rapport à la section d'application de charge (31) ; et
dans lequel le second élément (12) est monté contre le premier élément (11) par l'intermédiaire d'un second roulement à billes (13b) ajusté au second trou (11b) du premier élément (11) de telle sorte que le second élément (12) puisse tourner par rapport au premier élément (11).

2. Unité de suspension du dispositif de pesage selon la revendication 1,
dans laquelle le second axe est un axe inclus à la fois dans un premier plan virtuel perpendiculaire au premier accès et dans un second plan virtuel parallèle au premier axe.

3. Unité de suspension du dispositif de pesage selon la revendication 1 ou 2,
dans laquelle une distance de centre à centre entre le premier roulement à billes (13a) et le second roulement à billes (13b) est réglée pour être supérieure à une somme d'un rayon du premier roulement à billes et d'un rayon du second roulement à billes et égale ou inférieure à 1,5 fois la somme.

4. Unité de suspension du dispositif de pesage selon l'une quelconque des revendications 1 à 3, dans lequel le contenant de pesage auquel est fixée l'unité de suspension du dispositif de pesage est une trémie de pesage (2).

5. Unité de suspension du dispositif de pesage selon l'une quelconque des revendications 1 à 4, dans lequel le premier élément (11) a une première surface perpendiculaire au premier axe et une seconde surface perpendiculaire au second axe.

6. Unité de suspension du dispositif de pesage selon la revendication 5,
dans laquelle le second élément (12) a une surface de montage parallèle à la seconde surface ; et
dans laquelle un arbre rotatif (14) du second élément (12) est monté contre la surface de montage de telle sorte que l'arbre rotatif s'étende dans un sens perpendiculaire à la surface de montage.

7. Dispositif de pesage comprenant :
l'unité de suspension (1) du dispositif de pesage selon l'une quelconque des revendications 1 à 6 ;
une cellule de charge (3) comportant une section d'application de charge en forme d'arbre (31) et fixée à un corps de dispositif de pesage dans un état dans lequel un arbre de la section d'application de charge est orienté horizontalement ; et
une trémie de pesage (2) comportant une section de montage (12a) au niveau d'une partie supérieure de celle-ci ;
dans lequel le second élément (12) de l'unité de suspension du dispositif de pesage est fixé à la section de montage (12a) de la trémie de pesage et le premier élément (11) de l'unité de suspension (1) du dispositif de pesage est monté contre la section d'application de charge (31) de la cellule de charge (3) par l'intermédiaire du premier roulement à billes (13a).
